# EUROPÄISCHE PATENTSCHRIFT

(11) **EP 3 191 325 B1**
(45) Veröffentlichungstag und Bekanntmachung des Hinweises auf die Patenterteilung: **01.05.2019**
(21) Anmeldenummer: 15759812.9
(22) Anmeldetag: 08.09.2015
(51) Int. Cl.: B60G 9/00, B60G 7/00, B60G 7/02

(54) **LENKERANORDNUNG**
ARM ASSEMBLY
ARRANGEMENT DE BRAS

(30) Priorität: 12.09.2014 DE 102014218321
(43) Veröffentlichungstag der Anmeldung: 19.07.2017
(73) Patentinhaber: SAF-HOLLAND GmbH, 63856 Bessenbach-Keilberg (DE)
(72) Erfinder: Jansen, Roger, Holton, Michigan 49425 (US); Drewes, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2015/070443
(87) Internationale Veröffentlichungsnummer: WO 2016/038004

(56) Entgegenhaltungen:
- WO-A1-00/01548
- WO-A2-03/064192
- DE-U1- 29 824 897
- GB-A- 2 396 140
- US-A- 5 690 353

## Beschreibung

Die Erfindung betrifft eine Lenkeranordnung für ein Fahrzeug, insbesondere für ein Nutzfahrzeug.

Eine Lenkeranordnung dient der Aufhängung einer Fahrzeugachse am Fahrzeugrahmen, wobei die Fahrzeugachse im Falle von Nutzfahrzeugen üblicherweise eine starre Achse ist. Bekannt ist die Verwendung von Längslenkern, welche sich im Wesentlichen in Längsrichtung des Fahrzeugs erstrecken und um eine quer zur Fahrzeugachse verlaufende Schwenkachse gelagert sind. Dabei ist ein erstes Ende des Längslenkers am Fahrzeugrahmen, insbesondere einem Lagerbock, schwenkbar angeordnet. Ein zweites Ende des Längslenkers nimmt die Fahrzeugachse auf. Mittels zusätzliche Feder- und/oder Dämpfungselemente kann die Fahrzeugachse gefedert bzw. gedämpft am Rahmen des Fahrzeugs gelagert werden.

Eine Lenkeranordnung zur Lagerung einer Fahrzeugachse an einem Fahrzeugrahmen ist in der US 5,690,353 A beschrieben. Die Lenkeranordnung umfasst hierbei einen zweiteilig ausgeführten Längslenker. Der zweiteilige Längslenker ist über eine speziell geformte Lagerbuchse an einem Lagerbolzen des Fahrzeugrahmens gelagert. Der Erfindung liegt die Aufgabe zugrunde, eine Lenkeranordnung bereitzustellen, die besonders stabil aufgebaut und möglichst einfach montierbar ist.

Die GB 2 396 140 A offenbart einen Längslenker für ein Nutzfahr-zeug, welcher als einstückiges Gussteil ausgebildet ist und an welchem ein zweites Bauteil, welches zur Lagerung einer Luftfeder ausgelegt ist und sowohl an dem Achsrohr als auch an dem Lenkerelement festschweißbar ist.

Die WO 00/01548 A1 offenbart einen aus verschiedenen Blechteilen hergestellten und zusammengeschweißten Längslenker, wobei eine Buchsenaufnahme als separates Bauteil ausgebildet und an einem Ende des Lenkers festschweißbar ist.

Die DE 298 24 897 offenbart einen einstückig ausgebildeten Längs-lenker, an welchem in verschiedenen Befestigungspositionen ein Tragkörper festleg-bar ist, an welchem eine Luftfeder in Eingriff bringbar ist.

Die WO 03/064192 A2 offenbart einen als einstückiges Gussteil ausgebildeten Längslenker, bei welchem eine Buchsenaufnahme integral mit dem gesamten Längslenker ausgebildet ist.

Die US 2013/0228993 A1, die den Oberbegriff der Ansprüche 1 und 7 offenbart, zeigt ein Achssystem mit einem zweiteiligen Lenker, welcher aus verschiedenen Blechteilen zusammengesetzt ist, wobei an einem der Lenkerteile eine zylindrische Aufnahmebuchse festgelegt ist.

Die EP 0 296 568 A1 offenbart eine mehrteilige Lenkerkonstruktion bei der eine zweiteilige Radachsaufnahme in einen zweiteiligen Lenker eingeschweißt wird.

Die Aufgabe wird erfindungsgemäß durch eine Lenkeranordnung mit den Merkmalen des Anspruchs 1 gelöst. Bevorzugte Ausgestaltungen der Erfindung sind in den abhängigen Ansprüchen angegeben.

Die Lenkeranordnung umfasst einen Längslenker, welcher ein oberes Lenkerelement (Lenkeroberteil) und ein unteres Lenkerelement (Lenkerunterteil) aufweist. Die Lenkeranordnung umfasst des Weiteren mindestens eine Buchsenaufnahme zur Aufnahme einer Lagerbuchse. Die Buchsenaufnahme ist mindestens teilweise in zumindest eines der Lenkerelemente (in das Lenkeroberteil und/oder in das Lenkerunterteil) integriert. Alternativ ist die Buchsenaufnahme als separates Teil mit dem oberen Lenkerelement und dem unteren Lenkerelement (mit dem Lenkeroberteil und dem Lenkerunterteil) verbindbar. Die Erfindung geht von einem mehrteiligen, insbesondere zweiteiligen Längslenker aus, welcher ein oberes Lenkerelement und ein unteres Lenkerelement aufweist, die miteinander verbunden den Längslenker bilden. Dabei ist es bevorzugt, dass sowohl das obere Lenkerelement als auch das untere Lenkerelement eine Ausnehmung für eine Fahrzeugachse aufweisen, so dass die Fahrzeugachse zwischen dem oberen Lenkerelement und dem unteren Lenkerelement angeordnet werden kann. Die Fahrzeugachse braucht hierdurch nicht aufwendig in eine entsprechende Bohrung des Längslenkers eingeschoben werden, so dass die Montage gegenüber einem einteiligen Längslenker erheblich vereinfacht ist. Das obere Lenkerelement und das untere Lenkerelement werden zum Bilden des Längslenkers fest miteinander verbunden. Vorzugsweise ist hierzu eine stoffschlüssige Verbindung, insbesondere im Bereich der Fahrzeugachse bzw. im Bereich der jeweiligen Ausnehmungen in den Lenkerelementen vorgesehen. Alternativ oder zusätzlich kann auch eine formschlüssige und/oder kraftschlüssige Verbindung vorhanden sein. Die Fahrzeugachse ist, vorzugsweise stoffschlüssig, am Lenkeroberteil und am Lenkerunterteil festgelegt. Eine besonders bevorzugte Ausführungsform einer stoffschlüssigen Verbindung ist eine Schweißverbindung. Die Festlegung des Längslenkers am Fahrzeug bzw. am Fahrzeugrahmen (Lagerbock) erfolgt über eine Lagerbuchse, beispielsweise einen Gummiring, welche(r) einen Lagerzapfen aufnimmt. Der Längslenker weist hierzu eine Buchsenaufnahme zur Aufnahme der Lagerbuchse auf. Die Buchsenaufnahme definiert bzw. umgibt eine insbesondere zylindrische Öffnung, in welche die Lagerbuchse vorzugsweise eingepresst wird. Die Buchsenaufnahme ist zweckmäßigerweise umfangsseitig geschlossen, also beispielsweise als ein geschlossener Ring ausgeführt.

Erfindungsgemäß ist die Buchsenaufnahme in eines der Lenkerelemente, also das Lenkeroberteil oder das Lenkerunterteil, integriert. Hierunter ist insbesondere zu verstehen, dass zumindest ein Teil der Buchsenaufnahme einen integralen Teil des entsprechenden Lenkerelements bildet. Die Buchsenaufnahme ist also kein separates, an dem Lenkerelement festgelegtes Teil, sondern einstückig mit dem Lenkerelement gebildet. Das entsprechende Lenkerelement weist eine Ausnehmung oder Öffnung zum Aufnehmen bzw. zum Einpressen der Lagerbuchse auf. Die Buchsenaufnahme wird also durch eine entsprechende Formung des Lenkerelements gebildet. Die Buchsenaufnahme kann auch als Schwenkrohr bezeichnet werden bzw. ein Schwenkrohr bilden.

Das Lenkerelement ist erfindungsgemäß ein Gussteil. Die Buchsenaufnahme ist ein Bereich des Gussteils, welcher ggf. nachträglich bearbeitet sein kann. Die durch Formung einer Ausnehmung oder Öffnung in dem Lenkerelement gebildete Buchsenaufnahme ist besonders stabil und gewährleistet eine zuverlässige Lagerung der Lenkeranordnung am Fahrzeugrahmen. Durch die zweiteilige Ausführung der Lenkeranordnung ist die Montage zudem besonders einfach.

Gemäß einer alternativ bevorzugten Ausführungsform der Erfindung ist die Buchsenaufnahme ein separates, insbesondere ringförmiges Teil, welches an hierfür vorgesehenen Befestigungsflächen der Lenkerelemente befestigbar ist. Insbesondere ist eine stoffschlüssige Verbindung zwischen dem Lenkerelement (beispielsweise Gussteil) und der Buchsenaufnahme vorgesehen. Zweckmäßigerweise weisen die Lenkerelemente jeweils eine gebogene Kontakt- oder Verbindungsfläche zur Anlage an eine entsprechend gebogene Außenfläche der ringförmigen Buchsenaufnahme auf. Vorzugsweise sind die Kontakt- bzw. Verbindungsfläche und die Außenfläche flächig miteinander verbunden. Die flächige Verbindung zwischen Lenkerelement und Buchsenaufnahme ist im Vergleich zu einer lediglich punktuellen oder linienförmigen Verbindung besonders stabil. Die Kontaktflächen der Lenkerelemente sind zum Zusammenwirken mit der insbesondere zylinderförmigen Mantelfläche der Buchsenaufnahme im Querschnitt vorzugsweise kreisbogenförmig ausgeführt.

In einer bevorzugten Ausführungsform der Erfindung ist vorgesehen, dass die Buchsenaufnahme vollständig in eines der Lenkerelemente integriert ist. Hierunter ist zu verstehen, dass die Buchsenaufnahme so ausgeführt ist, dass eine hierin aufgenommene Lagerbuchse ausschließlich das obere Lenkerelement oder das untere Lenkerelement kontaktiert. Das entsprechende Lenkerelement weist insbesondere eine umfangseitig geschlossene Öffnung für die Lagerbuchse auf. Die insbesondere zylindrische Öffnung wird vorzugsweise durch das gegossene Material des als Gussteil ausgeführten Lenkerelements umgeben. Die Öffnung wird vorzugsweise am Ende des Lenkerelements von einer bogenförmigen Wand begrenzt. Die bogenförmige Wand bildet vorzugsweise einen kreisbogenförmigen Abschnitt eines Hohlzylinders.

Gemäß einer Ausführungsform der Erfindung ist vorgesehen, dass die Buchsenaufnahme in das obere Lenkerelement integriert und mit dem unteren Lenkerelement verbindbar bzw. im montierten Zustand mit dem unteren Lenkerelement verbunden ist. Durch die Integration in das dem Fahrzeug zugewandte Lenkerelement wird eine besonders gute Stabilität erreicht. Die beiden Lenkerelemente sind im Bereich der Buchsenaufnahme miteinander verbunden.

Vorzugsweise ist vorgesehen, dass die Buchsenaufnahme eine bogenförmige, insbesondere zylinderförmige, Außenfläche oder Außenwand aufweist und dass das untere Lenkerelement eine entsprechend gebogene Anlage- oder Verbindungsfläche zum Anlegen an die bogenförmige Außenfläche oder Außenwand bzw. zum Verbinden mit der bogenförmigen Außenfläche oder Außenwand der Buchsenaufnahme aufweist. Die Außenwand weist insbesondere eine zylindrische Außenfläche auf. Die Anlage- oder Verbindungsfläche zur Verbindung mit der Außenfläche der Buchsenaufnahme weist vorzugsweise einen bogenförmigen oder kreisbogenförmigen Querschnitt auf. Vorzugsweise ist eine stoffschlüssige Verbindung vorgesehen.

Gemäß einer weiteren Ausführungsform der Erfindung ist die Buchsenaufnahme in das untere Lenkerelement integriert und mit dem oberen Lenkerelement verbindbar bzw. im montierten Zustand mit dem oberen Lenkerelement verbunden.

Vorzugsweise ist vorgesehen, dass die Buchsenaufnahme eine bogenförmige, insbesondere zylinderförmige, Außenfläche oder Außenwand aufweist und dass das obere Lenkerelement eine entsprechend gebogene Anlage- oder Verbindungsfläche zum Anlegen an die bogenförmige Außenfläche oder Außenwand bzw. zum Verbinden mit der bogenförmigen Außenfläche oder Außenwand der Buchsenaufnahme aufweist. Die Außenwand weist insbesondere eine zylindrische Außenfläche auf. Die Anlage- oder Verbindungsfläche zur Verbindung mit der Außenfläche der Buchsenaufnahme weist vorzugsweise einen bogenförmigen oder kreisbogenförmigen Querschnitt auf. Vorzugsweise ist eine stoffschlüssige Verbindung vorgesehen.

In einer weiteren erfindungsgemäßen Ausführungsform ist die Buchsenaufnahme mehrteilig ausgeführt und weist eine Oberschale und eine Unterschale auf. Die Oberschale der insbesondere zweiteiligen Buchsenaufnahme kann beispielsweise an dem oberen Lenkerelement und die Unterschale an dem unteren Lenkerelement angeordnet, insbesondere befestigt sein. Oberschale und Unterschale bilden vorzugsweise im zusammengefügten Zustand eine geschlossene Buchsenaufnahme, also eine insbesondere zylindrische Öffnung mit einer geschlossenen Mantelfläche.

Es ist bevorzugt, dass die Oberschale der Buchsenaufnahme in das obere Lenkerelement und die Unterschale der Buchsenaufnahme in das untere Lenkerelement integriert ist. Vorzugsweise weist also das obere Lenkerelement eine einstückig oder einteilig bzw. integral mit diesem gebildete Oberschale und das untere Lenkerelement eine entsprechende Unterschale auf. Mit anderen Worten weist das obere Lenkerelement eine im Querschnitt vorzugsweise teil- oder halbkreisförmige erste Ausnehmung und das untere Lenkerelement eine den Kreis vervollständigende zweite Ausnehmung auf. Die die Buchsenaufnahme bildenden Ausnehmungen in dem oberen bzw. unteren Lenkerelement sind erfindungsgemäß direkt in dem Gussmaterial des Lenkerelements ausgebildet.

In einer weiteren bevorzugten Ausführungsform der Erfindung ist vorgesehen, dass die Lenkerelemente bogenförmig einen inneren Freiraum umgeben und im Bereich der Buchsenaufnahme über die Buchsenaufnahme miteinander verbindbar sind. Vorzugsweise sind die Lenkerelemente im Bereich der Fahrzeugachse direkt miteinander, insbesondere stoffschlüssig, verbindbar (bzw. im zusammengefügten Zustand verbunden) und im Bereich der Buchsenaufnahme indirekt, über die Buchsenaufnahme verbindbar (bzw. im zusammengefügten Zustand verbunden). Hierzu sind die Lenkerelemente jeweils mit der Buchsenaufnahme, insbesondere stoffschlüssig, verbindbar.

Insgesamt kann die Erfindung auch folgendermaßen beschrieben werden:
Ein Längslenker umfasst zwei Hälften, nämlich eine obere Hälfte und eine untere Hälfte, die im zusammengefügten Zustand an einem rohrförmigen Schwenkbereich (Buchsenaufnahme) miteinander verbunden sind. Der rohrförmige Schwenkbereich bzw. die Buchsenaufnahme umgrenzt eine Öffnung zur Aufnahme einer Lagerbuchse. Zur Verbindung der beiden Hälften des Längslenkers bestehen unterschiedliche Möglichkeiten:
Eine bevorzugte Verbindung besteht darin, dass das Rohr für die Lagerbuchse (die Buchsenaufnahme) in das obere Gussteil integriert ist und das untere Gussteil mit einem Bodenbereich (unteren Bereich) des Rohres verbunden ist. In einer alternativen Konfiguration ist das Rohr zur Aufnahme der Lagerbuchse (die Buchsenaufnahme) ein separates Teil. Die Lenkerelemente bzw. Lenkerhälften sind mit dem Rohr in einem oberen bzw. einem unteren Bereich verbunden. Eine weitere Möglichkeit besteht darin, dass ein Teil oder eine Hälfte des Aufnahmerohres für die Lagerbuchse in das obere Lenkerelement eingebracht bzw. eingegossen ist und ein zweiter Teil bzw. eine zweite Hälfte in das untere Lenkerelement. Wenn die beiden Lenkerelemente bzw. Lenkerhälften miteinander verbunden sind, wird das Aufnahmerohr bzw. die rohrförmige Buchsenaufnahme gebildet.

Die Erfindung wird nachfolgend anhand von bevorzugten Ausführungsformen, welche in den beiliegenden, schematischen Zeichnungen dargestellt sind, weiter beschrieben. Hierin zeigt:
- Fig. 1:: eine erste Ausführungsform einer erfindungsgemäßen Lenkeranordnung in einem teilweise demontierten Zustand;
- Fig. 2:: die Lenkeranordnung gemäß Fig. 1 in einem montierten Zustand;
- Fig. 3:: eine zweite Ausführungsform einer erfindungsgemäßen Lenkeranordnung in einem teilweise demontierten Zustand;
- Fig. 4:: die Lenkeranordnung gemäß Fig. 3 in einem montierten Zustand und
- Fig. 5:: eine Achsanordnung mit zwei an einer Fahrzeugachse angeordneten Lenkeranordnungen.

Gleiche oder gleich wirkende Elemente sind in sämtlichen Figuren mit denselben Bezugszeichen gekennzeichnet.

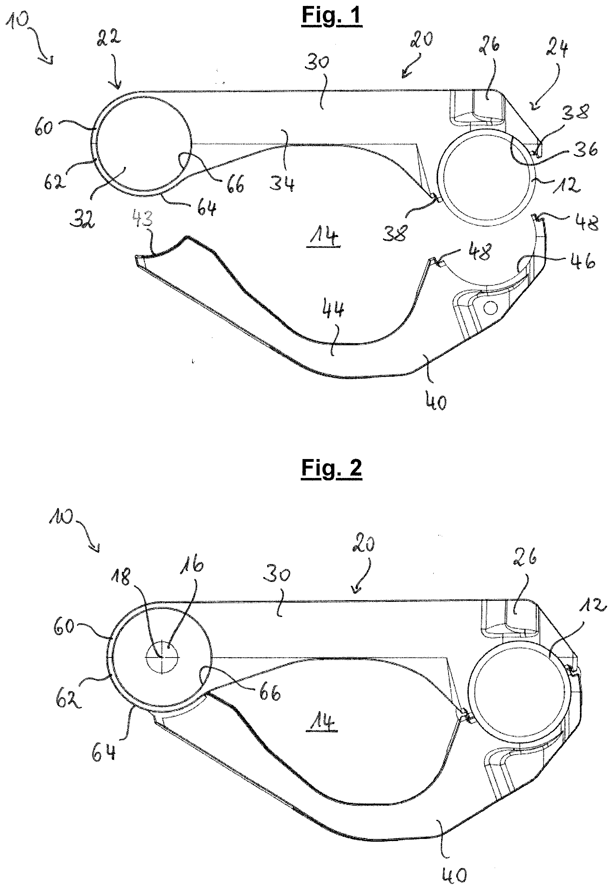

Die Figuren 1 und 2 zeigen eine erste bevorzugte Ausführungsform einer Lenkeranordnung 10 mit einem Längslenker 20, welcher durch ein oberes Lenkerelement 30 und ein unteres Lenkerelement 40 gebildet wird. Die Lenkerelemente 30, 40 können als Gussteile geformt sein und sind jeweils bogenförmig gestaltet.

An einem ersten Ende 22 des oberen Lenkerelements 30 ist eine Buchsenaufnahme 60 zur Aufnahme einer nicht dargestellten Lagerbuchse gebildet, die eine Öffnung 32 für die Lagerbuchse mit einem zylindrischen Querschnitt umgrenzt. Die Buchsenaufnahme 60 umfasst eine zylindrische Wand 62 mit einer zylindrischen Außenfläche 64 und einer ebenfalls zylindrischen Innenfläche 66. Von der zylindrischen Außenfläche 64 erstrecken sich Lenkerstege 34 in Richtung eines zweiten Endes 24 des Lenkerelements 30 bzw. Längslenkers 20. Die Lenkerstege 34 und die zylindrische Wand 62 sind als einstückiges Gussteil gebildet oder miteinander verschweißt. An dem zweiten Ende 24 weist das obere Lenkerelement 30 eine Ausnehmung 36 (Aussparung, Einbuchtung) zur Aufnahme einer Fahrzeugachse 12 auf. Die Fahrzeugachse 12 ist beispielsweise ein zylindrisches Achsrohr. Entsprechend weist die Ausnehmung 36 vorzugsweise eine kreisbogenförmige Kontur auf. Ferner ist am zweiten Ende 24 der Lenkeranordnung 10 eine Aufnahme 26 zur Aufnahme eines Dämpfungs- und/oder Federelements gebildet.

Das untere Lenkerelement 40 weist an seinem ersten Ende 22 eine Anlagefläche 43 zur Anlage an die zylindrische Außenfläche 64 der Buchsenaufnahme 60 auf. Die insbesondere kreisbogenförmige Anlagefläche 43 ist an die Krümmung der Außenfläche 64 angepasst. Am gegenüberliegenden zweiten Ende 24 ist eine Ausnehmung 46 (Aussparung, Einbuchtung) zur Aufnahme der Fahrzeugachse 12 gebildet. Im zusammengefügten Zustand der Lenkerelemente 30, 40 bilden die Ausnehmungen 36 und 46 eine umfangsseitig geschlossene Öffnung für die Fahrzeugachse 12, vorzugsweise mit einem zylindrischen Querschnitt. Zwischen dem ersten Ende 22 und dem zweiten Ende 24 erstrecken sich bogenförmige Lenkerstege 44.

Zur Verbindung des oberen Lenkerelements 30 mit dem unteren Lenkerelement 40 sind im Bereich des zweiten Endes 24 entlang der Fahrzeugachse 12 am oberen Lenkerelement 30 und am unteren Lenkerelement 40 jeweils Verbindungs- oder Fügebereiche 38 bzw. 48 ausgebildet. Die Lenkerelemente 30, 40 kontaktieren sich im Bereich der Verbindungsbereiche 38, 48 und werden dort vorzugsweise stoffschlüssig miteinander verbunden. Eine zweite Verbindung der Lenkerelemente 30, 40 erfolgt im Bereich des ersten Endes 22 durch eine vorzugsweise stoffschlüssige Verbindung der Anlagefläche 43 mit der Außenfläche 64 der Wand 62 der Buchsenaufnahme 60. Auf diese Weise lassen sich die Lenkerelemente 30, 40 an ihren gegenüberliegenden Längsenden fest miteinander verbinden, während in einem inneren Bereich zwischen den Lenkerelementen 30, 40 ein Freiraum 14 ohne Kontakt der Lenkerelemente 30, 40 gebildet ist.

Die Buchsenaufnahme 60 dient der Aufnahme einer Lagerbuchse, vorzugsweise einer Kunststoff- oder Gummibuchse, welche beispielsweise als sogenannte 3D-Buchse (dreidimensionale Buchse) ausgeführt sein kann. Die Lagerbuchse kann beispielsweise gemäß US 5 690 353 gestaltet sein, deren Offenbarung insoweit durch Bezugnahme eingeschlossen ist. Die Lagerbuchse ist an einem Lagerzapfen 16 lagerbar, welcher eine Schwenkachse 18 definiert. Auf diese Weise ist die Lenkeranordnung 10 bzw. der Längslenker 20 um die Schwenkachse 18 drehbar gelagert.

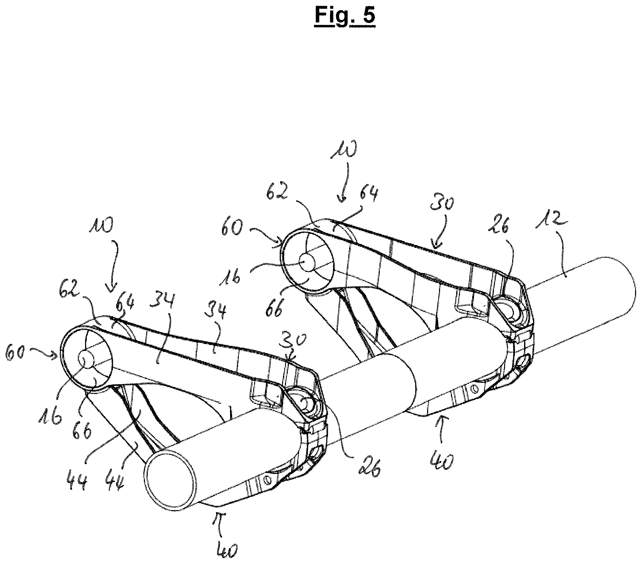

Fig. 5 zeigt eine perspektivische Ansicht einer Achseinheit mit zwei gegenüberliegend bzw. nebeneinander angeordneten Lenkeranordnungen 10, welche im Wesentlichen der Ausführung gemäß Figuren 1 und 2 entsprechen. Die jeweiligen oberen Lenkerelemente 30 sind dem Fahrzeug zugewandt, während die unteren Lenkerelemente 40 dem Boden zugewandt bzw. dem Fahrzeug abgewandt sind.

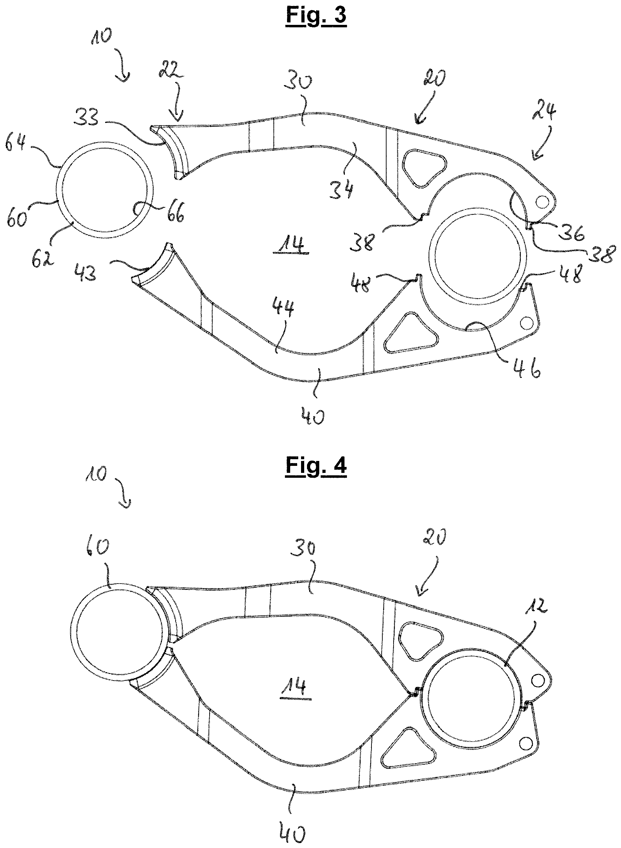

Die Figuren 3 und 4 zeigen eine weitere Ausführungsform einer erfindungsgemäßen Lenkeranordnung 10. Im Unterschied zu der Ausführungsform gemäß Figuren 1 und 2 ist die Buchsenaufnahme 60 als separates Teil ausgeführt, welches im Bereich des ersten Endes 22 sowohl an dem oberen Lenkerelement 30 als auch an dem unteren Lenkerelement 40 festlegbar ist. Die Buchsenaufnahme 60 weist eine zylindrische Wand 62 mit einer zylindrischen Außenfläche 64 und einer zylindrischen Innenfläche 66 auf. Das obere Lenkerelement 30 weist eine bogenförmige Anlagefläche 33 zur Anlage an die zylindrische Außenfläche 64 der hülsenförmigen Buchsenaufnahme 60 auf. Die Anlagefläche 33 erstreckt sich als gebogenes Blech mit einer kreisbogenförmigen Kontur zwischen zwei nebeneinander verlaufenden Lenkerstegen 34, die sich in Richtung des zweiten Endes 24 erstrecken.

Das untere Lenkerelement 40 ist im Wesentlichen analog zu dem oberen Lenkerelement 30 gestaltet. Das Lenkerelement 40 weist eine bogenförmige Anlagefläche 43 zur Anlage an die zylindrische Außenfläche 64 der hülsenförmigen Buchsenaufnahme 60 auf. Die Anlagefläche 43 erstreckt sich als gebogenes Blech mit einer kreisbogenförmigen Kontur zwischen zwei nebeneinander verlaufenden Lenkerstegen 44, die sich in Richtung des zweiten Endes 24 erstrecken.

### Bezugszeichenliste:

- 10: Lenkeranordnung
- 12: Fahrzeugsachse
- 14: Freiraum
- 16: Lagerzapfen
- 18: Schwenkachse
- 20: Längslenker
- 22: erstes Ende
- 24: zweites Ende
- 26: Aufnahme
- 30: oberes Lenkerelement
- 32: Öffnung
- 33: Anlagefläche
- 34: Lenkersteg
- 36: Ausnehmung
- 38: Verbindungsbereich
- 40: unteres Lenkerelement
- 43: Anlagefläche
- 44: Lenkersteg
- 46: Ausnehmung
- 48: Verbindungsbereich
- 60: Buchsenaufnahme
- 62: Wand
- 64: Außenfläche
- 66: Innenfläche

## Patentansprüche

1. Lenkeranordnung für ein Fahrzeug, aufweisend
einen Längslenker (20), welcher ein oberes Lenkerelement (30) und ein unteres Lenkerelement (40) aufweist, und
mindestens eine Buchsenaufnahme (60) zur Aufnahme einer Lagerbuchse, **dadurch gekennzeichnet, dass** die Buchsenaufnahme (60) in eines der Lenkerelemente (30, 40), welches als Gußteil ausgebildet ist, integriert ist und mit dem jeweils anderen Lenkerelement (30, 40) verbindbar ist.

2. Lenkeranordnung nach einem der vorhergehenden Ansprüche,
wobei die Buchsenaufnahme (60) vollständig in eines der Lenkerelemente (30, 40) integriert ist.

3. Lenkeranordnung nach einem der vorhergehenden Ansprüche,
wobei die Buchsenaufnahme (60) in das obere Lenkerelement (30) integriert und im montierten Zustand mit dem unteren Lenkerelement (40) verbunden ist.

4. Lenkeranordnung nach Anspruch 3, wobei die Buchsenaufnahme (60) eine gebogene Außenfläche (64) aufweist und
das untere Lenkerelement (40) eine entsprechend gebogene Anlagefläche (43) zum Anlegen an die gebogene Außenfläche (64) der Buchsenaufnahme (60) aufweist.

5. Lenkeranordnung nach einem der Ansprüche 1 oder 2,
wobei die Buchsenaufnahme (60) in das untere Lenkerelement (40) integriert und mit dem oberen Lenkerelement (30) verbindbar ist.

6. Lenkeranordnung nach Anspruch 5, wobei die Buchsenaufnahme (60) eine gebogene Außenfläche (64) aufweist und
das obere Lenkerelement (30) eine entsprechend gebogene Anlagefläche (33) zum Anlegen an die gebogene Außenfläche (64) der Buchsenaufnahme aufweist.

7. Lenkeranordnung für ein Fahrzeug, aufweisend einen Längslenker (20), welcher ein oberes Lenkerelement (30) und ein unteres Lenkerelement (40) aufweist, und
mindestens eine Buchsenaufnahme (60) zur Aufnahme einer Lagerbuchse, **dadurch gekennzeichnet, dass** die Buchsenaufnahme (60) in zumindest eines der Lenkerelemente (30, 40), welches als Gußteil ausgebildet ist, integriert ist,
wobei die Buchsenaufnahme (60) mehrteilig ausgeführt ist und eine Oberschale und eine Unterschale aufweist.

8. Lenkeranordnung nach Anspruch 7,
wobei die Oberschale der Buchsenaufnahme (60) in das obere Lenkerelement (30) und/oder die Unterschale der Buchsenaufnahme (60) in das untere Lenkerelement (40) integriert ist.

9. Lenkeranordnung nach einem der vorgehenden Ansprüche,
wobei die Lenkerelemente (30, 40) bogenförmig einen inneren Freiraum (14) umgeben und im Bereich der Buchsenaufnahme (60) über die Buchsenaufnahme (60) miteinander verbindbar sind.

## Claims

1. A link assembly for a vehicle, comprising
a longitudinal link (20) which has an upper link element (30) and a lower link element (40), and
at least one bushing receptacle (60) for receiving a bearing bushing, **characterized in that**, the bushing receptacle (60) is integrated in one of the link elements (30, 40), which is formed as a cast part, and is connectable to the other link element (30, 40) in each case.

2. The link assembly as claimed in one of the preceding claims,
wherein the bushing receptacle (60) is completely integrated in one of the link elements (30, 40).

3. The link assembly as claimed in one of the preceding claims,
wherein the bushing receptacle (60) is integrated in the upper link element (30) and, in the mounted state, is connected to the lower link element (40).

4. The link assembly as claimed in claim 3,
wherein the bushing receptacle (60) has a curved outer surface (64), and the lower link element (40) has a correspondingly curved abutment surface (43) for placing against the curved outer surface (64) of the bushing receptacle (60).

5. The link assembly as claimed in either of claims 1 and 2,
wherein the bushing receptacle (60) is integrated in the lower link element (40) and is connectable to the upper link element (30).

6. The link assembly as claimed claim 5,
wherein the bushing receptacle (60) has a curved outer surface (64), and the upper link element (30) has a correspondingly curved abutment surface (33) for placing against the curved outer surface (64) of the bushing receptacle.

7. A link assembly for a vehicle, comprising
a longitudinal link (20) which has an upper link element (30) and a lower link element (40), and
at least one bushing receptacle (60) for receiving a bearing bushing, **characterized in that**, the bushing receptacle (60) is integrated in at least one of the link elements (30, 40), which is formed as a cast part,
wherein the bushing receptacle (60) is of multi-part design and has an upper shell and a lower shell.

8. The link assembly as claimed in claim 7,
wherein the upper shell of the bushing receptacle (60) is integrated in the upper link element (30) and/or the lower shell of the bushing receptacle (60) is integrated in the lower link element (40).

9. The link assembly as claimed in one of the preceding claims,
wherein the link elements (30, 40) surround an inner clearance (14) in a curved manner and are connectable to each other in the region of the bushing receptacle (60) via the bushing receptacle (60).

## Revendications

1. Ensemble formant bras oscillant pour un véhicule, comportant un bras oscillant longitudinal (20) qui comprend un élément de bras supérieur (30) et un élément de bras inférieur (40), et
au moins un logement à coussinet (60) pour recevoir un coussinet de palier, **caractérisé en ce que**
le logement à coussinet (60) est intégré dans l'un des éléments de bras (30, 40) qui est réalisé sous forme de pièce de fonderie et auquel l'autre élément de bras respectif (30, 40) est susceptible d'être relié.

2. Ensemble formant bras oscillant selon la revendication précédente, dans lequel le logement à coussinet (60) est intégré complètement dans l'un des éléments de bras (30, 40).

3. Ensemble formant bras oscillant selon l'une des revendications précédentes,
dans lequel
le logement à coussinet (60) est intégré dans l'élément de bras supérieur (30) et est relié, dans l'état monté, à l'élément de bras inférieur (40).

4. Ensemble formant bras oscillant selon la revendication 3,
dans lequel
le logement à coussinet (60) présente une surface extérieure recourbée (64), et
l'élément de bras inférieur (40) présente une surface d'appui (43) recourbée en correspondance pour venir en appui contre la surface extérieure recourbée (64) du logement à coussinet (60).

5. Ensemble formant bras oscillant selon l'une des revendications 1 ou 2, dans lequel
le logement à coussinet (60) est intégré dans l'élément de bras inférieur (40) et est susceptible d'être relié à l'élément de bras supérieur (30).

6. Ensemble formant bras oscillant selon la revendication 5,
dans lequel
le logement à coussinet (60) présente une surface extérieure recourbée (64) et l'élément de bras supérieur (30) présente une surface extérieure (33) recourbée en correspondance pour venir en appui contre la surface extérieure recourbée (64) du logement à coussinet.

7. Ensemble formant bras oscillant pour un véhicule, comportant un bras oscillant longitudinal (20) qui comprend un élément de bras supérieur (30) et un élément de bras inférieur (40), et
au moins un logement à coussinet (60) pour recevoir un coussinet de palier, **caractérisé en ce que**
le logement à coussinet (60) est intégré dans l'un au moins des éléments de bras (30, 40) qui est réalisé sous forme de pièce de fonderie,
le logement à coussinet (60) est réalisé en plusieurs pièces et comprend une coque supérieure et une coque inférieure.

8. Ensemble formant bras oscillant selon la revendication 7,
dans lequel
la coque supérieure du logement à coussinet (60) est intégrée dans l'élément de bras supérieur (30) et/ou la coque inférieure du logement à coussinet (60) est intégrée dans l'élément de bras inférieur (40).

9. Ensemble formant bras oscillant selon l'une des revendications précédentes,
dans lequel les éléments de bras (30, 40) entourent en forme arquée un espace libre intérieur (14) et sont susceptibles d'être reliés l'un à l'autre par le logement à coussinet (60) au niveau du logement à coussinet (60).
